# EUROPÄISCHE PATENTSCHRIFT

(11) **EP 1 983 140 B1**
(45) Veröffentlichungstag und Bekanntmachung des Hinweises auf die Patenterteilung: **04.05.2016**
(21) Anmeldenummer: 08102610.6
(22) Anmeldetag: 14.03.2008
(51) Int. Cl.: E06B 3/667

(54) **Steckverbinder**
Connector
Connecteur

(30) Priorität: 20.04.2007 DE 202007005836 U
(43) Veröffentlichungstag der Anmeldung: 22.10.2008
(73) Patentinhaber: CERA GmbH, 87674 Ruderatshofen (DE)
(72) Erfinder: Rafeld-Cech, Karin, D-87499 Wildpoldsried (DE)
(74) Vertreter: Hutzelmann, Gerhard

(56) Entgegenhaltungen:
- EP-A1- 0 778 389
- DE-A1- 4 444 888

## Beschreibung

Die Erfindung betrifft einen Steckverbinder aus Kunststoff zum Verbinden von Abstandhalter-Hohlprofilen aus Metall, Kunststoff od. dgl. für insbesondere Mehrscheibenisoliergläser.

Es sind bereits derartige Steckverbinder bekannt, bei denen der Steckverbinder an seinen Seitenstegen mit nach außen gerichteten, entgegen der Einsteckrichtung nach hinten geneigten Lamellen versehen ist und bei denen der Steckverbinder im Bereich seiner Bodenfläche und im Bereich seiner Seitenstege derart ausgebildet ist, daß er sich wenigstens annähernd formschlüssig in ein Hohlprofil einsetzen lässt.

Aus der EP 0 778 389 A1 ist beispielsweise ein derartiger Steckverbinder bekannt.

Diese Steckverbinder weisen den Nachteil auf, in nur jeweils einen einzigen Hohlprofiltyp und eine Größe einsetzbar zu sein. Oftmals ist es schon schwierig, fertigungsbedingte Toleranzen der Hohlprofile auszugleichen.

Der Erfindung liegt daher die Aufgabe zugrunde, einen Steckverbinder gemäß dem Oberbegriff des Hauptanspruches vorzuschlagen, der in verschiedene Hohlprofile einsetzbar ist und sich selbst an diese anzupassen vermag.

Diese Aufgabe wird erfindungsgemäß dadurch gelöst, daß die nach hinten geneigten Lamellen elastisch am Steckverbinder angelenkt sind.

Durch diese Ausgestaltung wird eine Anpassung an verschiedene Hohlprofilbreiten ermöglicht, ohne den festen Sitz des Verbinders im Hohlprofil negativ zu beeinflussen.

Dabei hat es sich als äußerst vorteilhaft erwiesen, wenn ein U-förmiger Steckverbinder vorgesehen ist.

U-förmige Steckverbinder haben sich bei einer Vielzahl von Hohlprofilen bewährt.

Ebenfalls sehr vorteilhaft ist es, wenn die Länge der Verbindung zwischen Lamelle und Seitensteg reduziert ist.

Hierdurch wird die erwünschte Elastizität der Verbindung zwischen Lamelle und Steckverbinder hergestellt bzw. erhöht.

Sehr vorteilhaft ist es erfindungsgemäß auch, wenn zwischen Seitensteg und Lamelle eine Ausnehmung vorgesehen ist, die in die Lamelle hineinragt.

Dadurch wird wiederum die Verbindungslänge reduziert und so die gewünschte Elastizität hergestellt.

Dabei ist es sehr vorteilhaft, wenn die Ausnehmung von der Bodenfläche her gesehen in die Lamelle hineinragt.

An dieser Stelle kann die Elastizität hergestellt werden, ohne die Stabilität der Anlenkung zu stark zu schwächen.

Eine weitere sehr vorteilhafte Ausgestaltung der Erfindung liegt auch dann vor, wenn die Ausnehmung zwischen einem Drittel und der Hälfte der Lamellenhöhe einnimmt.

Damit wird eine hohe Elasizität erreicht, bei gleichzeitig hoher Stabilität.

Eine sehr vorteilhafte Weiterbildung der Erfindung liegt auch dann vor, wenn die Lamellen mit der Steckverbinderlängsachse eine Winkel von 20 bis 40°, vorzugsweise von etwa 30° einschließen.

Bei einer derartigen Schrägstellung der Lamellen wird ein sehr leichtes Einführen des Steckverbinders in verschiedenste Hohlprofile und gleichzeitig ein sehr guter und fester Sitz sichergestellt. Zudem wird eine sehr gute Anpassung an verschiedene Hohlprofile und Hohlprofilabmessungen ermöglicht.

Weiterhin hat es sich als sehr vorteilhaft erwiesen, wenn Anschläge an den Außenseiten der Seitenstege vorgesehen sind.

Mit derartigen Anschlägen kann eine Mittefindung realisiert werden.

Äußerst vorteilhaft ist es erfindungsgemäß auch, wenn die Bodenfläche wenigstens eine Durchbrechung aufweist.

Hierdurch wird Material eingespart, ohne die Stabilität des Verbinders negativ zu beeinflussen.

Eine weitere sehr vorteilhafte Ausgestaltung der Erfindung liegt auch dann vor, wenn die Seitenstege wenigstens im oberen Bereich der Kontur des zu verbindenden Hohlprofils angepasst ausgebildet sind.

Dadurch wird ein sehr guter Sitz des Verbinders im Hohlprofil gewährleistet.

Erfindungsgemäß hat es sich auch als sehr vorteilhaft erwiesen, wenn die Seitenstege im oberen Bereich an der Außenseite nach innen abgeschrägt ausgebildet sind.

Durch die Abschrägung kann der Verbinder nochmals leichter in die Hohlprofile eingesetzt werden.

Im folgenden wird die Erfindung anhand eines Ausführungsbeispiels veranschaulicht. Dabei zeigen:
- Fig. 1: eine Ansicht der Oberseite eines erfindungsgemäßen Verbinders,
- Fig. 2: eine Ansicht der Unterseite desselben Verbinders,

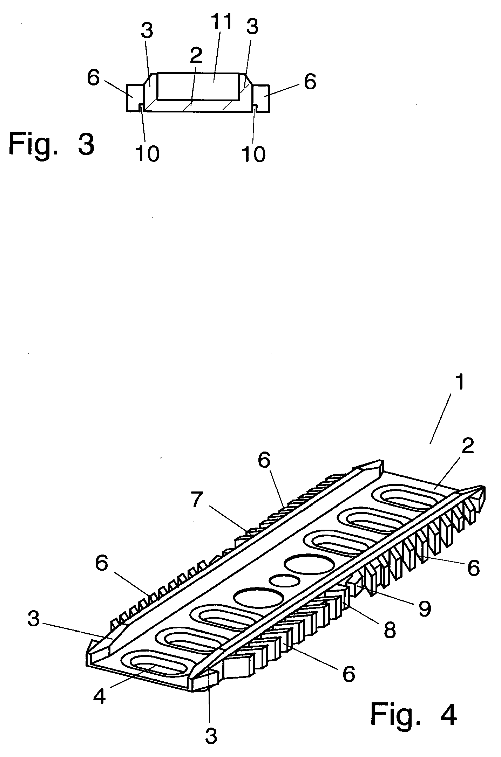

- Fig. 3: einen Querschnitt durch denselben Verbinder und
- Fig. 4: ein Schaubild des Verbinders.

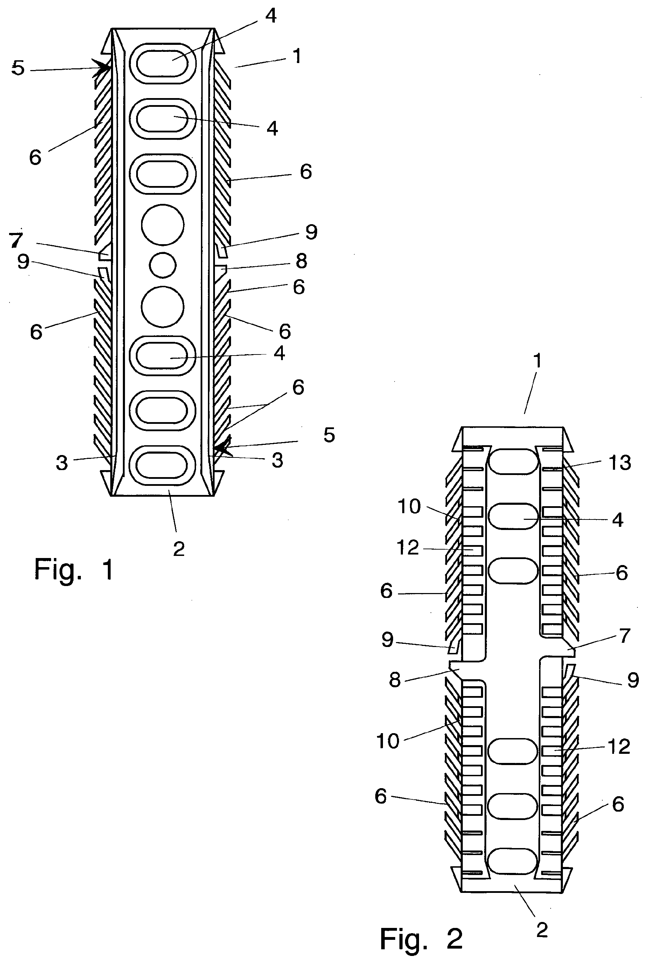

Mit 1 ist in Fig. 1 ein U-förmiger Steckverbinder zum Einstecken in Abstandhalterhohlprofile zum Beispiel aus dem Fensterbau bezeichnet, der aus einer Bodenfläche 2 und zwei daran an den Längsseitenkanten angelenkten Seitenstegen 3 aufgebaut ist. Die Bodenfläche 2 ist mit Ausnehmungen 4 ausgerüstet, welche die Bodenfläche durchbrechen. Der Verbinder 1 weist in Querrichtung ein U-förmiges Profil auf. Die Bodenfläche 2 und die Seitenstege 3 bilden zusammen das U-förmige Profil des Steckverbinders 1. An den Außenseiten 5 der Seitenstege 3 sind entgegen der Einsteckrichtung des Steckverbinders 1 nach hinten geneigte, federnd ausgebildete Lamellen 6 vorgesehen, welche sich in den nicht dargestellten Hohlprofilen zu verhaken vermögen und durch ihre federnde Ausgestaltung Toleranzen in den Abmessungen der Hohlprofile auszugleichen vermögen.

In der Mitte der Längserstreckung der Seitenstege 3 ist auf deren Außenseite 5 jeweils ein Mittenanschlag 7 und 8 vorgesehen, wobei der Mittenanschlag 7 für das erste Hohlprofil und der Mittenanschlag 8 für das zweite Hohlprofil vorgesehen ist. In Einsteckrichtung vor den Mittenanschlägen 7 und 8 ist jeweils ein Ausgleichselement 9 vorgesehen, welches federnd ausgebildet ist und einerseits ein Wackeln des Verbinders 1 in den Hohlprofilen verhindert und andererseits Breitentoleranzen der Hohlprofile auszugleichen vermag.

An der Außenseite der Bodenfläche 2 können entlang den Längskanten eine Vielzahl von Erhebungen 12 vorgesehen sein. Diese Erhebungen 12 stützen sich an der Breitseite der Hohlprofile ab. Die Erhebungen 12 können jeweils auf der in Einsteckrichtung des Verbinders 1 vorne liegenden Seite abgeflacht und als Auflaufschräge ausgebildet sein. Die in Einsteckrichtung hinten liegende Seite der Erhebungen 12 ist dagegen senkrecht zur Bodenfläche 2 hin abfallend ausgebildet, wodurch ein leichtes Einstecken ermöglicht wird, aber dennoch eine gute Verhakung der Erhebungen an bereits kleinsten Unebenheiten der Innenseite des Hohlprofils ermöglicht wird.

Es können neben den Erhebungen 12 auch noch lamellenförmige Stege 13 vorgesehen sein, die sich ebenfalls auf der Innenseite der Hohlprofile abzustützen vermögen. Diese Stege 13 können plastisch und elastisch verformbar oder aber federnd ausgebildet sein.

Die Lamellen 6 sind an den Seitenstegen 3 des Steckverbinders 1 elastisch angelenkt. Um die Elastizität nahezu unabhängig vom Material auf den gewünschten Wert zu bringen, ist die Verbindungslänge zwischen den Lamellen 6 und den Seitenstegen 3 reduziert. Hierzu sind von der Bodenfläche her Ausnehmungen 10 vorgesehen, die von den Seitenstegen 3 ausgehend in die Lamellen 6 hineinragen.

Zusätzlich sind die Lamellen 6 stark entgegen der Einsteckrichtung geneigt, so daß diese einen Winkel von etwa 30° zur Steckverbinderlängsachse einnehmen. Es sind auch andere Winkel zwischen 20 und 40° denkbar.

Durch diese starke Neigung wird einerseits ein leichtes und sicheres Einführen der Steckverbinder 1 in verschiedene Hohlprofile sichergestellt und andererseits eine gute Anpassbarkeit an verschiedene Hohlprofile und Hohlprofilabmessungen ermöglicht. Zusätzlich wird dadurch ein sicherer Sitz der Steckverbinder 1 in den verschiedenen Hohlprofilen gewährleistet.

## Patentansprüche

1. Steckverbinder(1) aus Kunststoff zum Verbinden von Abstandhalter-Hohlprofilen aus Metall, Kunststoff od. dgl. für Mehrscheibenisoliergläser, wobei der Steckverbinder(1) an seinen Seitenstegen(3) mit nach außen gerichteten, entgegen der Einsteckrichtung nach hinten geneigten Lamellen(6) versehen ist und im Bereich seiner Bodenfläche(2) und im Bereich seiner Seitenstege(3) derart ausgebildet ist, daß er wenigstens annähernd formschlüssig in ein Hohlprofil eingesetzt werden kann, **dadurch gekennzeichnet, daß** die nach hinten geneigten Lamellen(6) elastisch am Steckverbinder(1) angelenkt sind.

2. Steckverbinder nach Anspruch 1, **dadurch gekennzeichnet, daß** ein U-förmiger Steckverbinder(1) vorgesehen ist.

3. Steckverbinder nach Anspruch 1 oder 2, **dadurch gekennzeichnet, daß** die Länge der Verbindung zwischen Lamelle(6) und Seitensteg(3) reduziert ausgebildet ist.

4. Steckverbinder nach einem der vorangehenden Ansprüche, **dadurch gekennzeichnet, daß** zwischen Seitensteg(3) und Lamelle(6) eine Ausnehmung(10) vorgesehen ist, die in die Lamelle(6) hineinragt.

5. Steckverbinder nach Anspruch 5, **dadurch gekennzeichnet, daß** die Ausnehmung(10) von der Bodenfläche(2) her gesehen in die Lamelle(6) hineinragt.

6. Steckverbinder nach einem der vorangehenden Ansprüche, **dadurch gekennzeichnet daß** die Ausnehmung(10) zwischen einem Drittel und der Hälfte der Lamellenhöhe einnimmt.

7. Steckverbinder nach einem der vorangehenden Ansprüche, **dadurch gekennzeichnet, daß** die Lamellen(6) mit der Steckverbinderlängsachse einen Winkel von 20 bis 40°, vorzugsweise von etwa 30° einschließen.

8. Steckverbinder nach einem der vorangehenden Ansprüche, **dadurch gekennzeichnet, daß** Anschläge(7,8) an den Außenseiten(5) der Seitenstege(3) vorgesehen sind.

9. Steckverbinder nach einem der vorangehenden Ansprüche, **dadurch gekennzeichnet, daß** die Bodenfläche(2) wenigstens eine Durchbrechung(4) aufweist.

10. Steckverbinder nach einem der vorangehenden Ansprüche, **dadurch gekennzeichnet, daß** die Seitenstege(3) im oberen Bereich an der Außenseite nach innen abgeschrägt ausgebildet sind.

11. Kombination aus einem Steckverbinder nach einem der vorangehenden Ansprüche und einem Abstandhalterhohlprofil für Mehrscheibenisoliergläser, **dadurch gekennzeichnet, daß** die Seitenstege(3) wenigstens im oberen Bereich der Kontur des zu verbindenden Hohlprofils angepasst ausgebildet sind.

## Claims

1. Plug connector (1) of plastics material for connecting spacer hollow sections of metal, plastics material or the like, for insulating glass units, wherein the plug connector (1) is provided at lateral webs (3) thereof with outwardly directed blades (6) inclined rearwardly against the direction of insertion and is so formed in the region of the base surface (2) thereof and in the region of the lateral webs (3) thereof that it can be inserted into a hollow section with at least approximate interlocking effect, **characterised in that** the rearwardly inclined blades (6) are resiliently connected with the plug connector (1).

2. Plug connector according to claim 1, **characterised in that** a U-shaped plug connector (2) is provided.

3. Plug connector according to claim 1 or 2, **characterised in that** the length of the connection between blade (6) and lateral web (3) is formed to be reduced.

4. Plug connector according to any one of the preceding claims, **characterised in that** a recess (10) into which the blade (6) projects is provided between lateral web (3) and blade (6).

5. Plug connector according to claim 5, **characterised in that** the recess (10) protrudes into the blade (6) as seen from the base surface (2).

6. Plug connector according to any one of the preceding claims, **characterised in that** the recess (10) occupies between a third and half of the blade height.

7. Plug connector according to any one of the preceding claims, **characterised in that** the blades (6) include with the plug connector longitudinal axis an angle of 20 to 40°, preferably approximately 30°.

8. Plug connector according to any one of the preceding claims, **characterised in that** the abutments (7, 8) are provided at the outer sides (5) of the lateral webs (3).

9. Plug connector according to any one of the preceding claims, **characterised in that** the base surface (2) has at least one passage (4).

10. Plug connector according to any one of the preceding claims, **characterised in that** the lateral webs (3) are formed in the upper region at the outer side to be chamfered inwardly.

11. Combination consisting of a plug connector according to any one of the preceding claims and a spacer hollow section for insulating glass units, **characterised in that** the lateral webs (3) are formed at least in the upper region to be adapted to the contour of the hollow section to be connected.

## Revendications

1. Connecteur (1) en matière plastique pour la liaison de profilés creux d'espacement en métal, matière plastique ou analogue pour vitrages isolants multicouches, le connecteur (1) étant pourvu sur ses branches latérales (3) de lamelles (6) dirigées vers l'extérieur, inclinées vers l'arrière à l'encontre de la direction d'enfichage et étant réalisé dans la zone de sa surface de base (2) et dans la zone de ses branches latérales (3) de façon à pouvoir être inséré dans un profilé creux au moins approximativement par complémentarité de forme, **caractérisé en ce que** les lamelles (6) inclinées vers l'arrière sont articulées élastiquement sur le connecteur (1).

2. Connecteur selon la revendication 1, **caractérisé en ce qu'**un connecteur (1) en forme de U est prévu.

3. Connecteur selon la revendication 1 ou la revendication 2, **caractérisé en ce que** la longueur de la liaison entre lamelle (6) et branche latérale (3) est réduite.

4. Connecteur selon l'une des revendications précédentes, **caractérisé en ce qu'**un évidement (10), qui pénètre dans la lamelle (6), est prévu entre branche latérale (3) et lamelle (6).

5. Connecteur selon la revendication 4, **caractérisé en ce que** l'évidement (10) pénètre dans la lamelle (6), vu de la surface de base (2).

6. Connecteur selon l'une des revendications précédente, **caractérisé en ce que** l'évidement (10) occupe entre un tiers et la moitié de la hauteur de la lamelle.

7. Connecteur selon l'une des revendications précédentes, **caractérisé en ce que** les lamelles (6) font un angle de 20 à 40°, de préférence d'environ 30°, avec l'axe longitudinal du connecteur.

8. Connecteur selon l'une des revendications précédentes, **caractérisé en ce que** des butées (7, 8) sont prévues sur les côtés extérieurs (5) des branches latérales (3).

9. Connecteur selon l'une des revendications précédentes, **caractérisé en ce que** la surface de base (2) présente au moins un percement (4).

10. Connecteur selon l'une des revendications précédentes, **caractérisé en ce que** les branches latérales (3) sont chanfreinés vers l'intérieur dans la zone supérieure sur le côté extérieur.

11. Combinaison d'un connecteur selon l'une des revendications précédentes et d'un profilé creux d'espacement pour vitrages isolants multicouches, **caractérisé en ce que** les branches latérales (3) sont adaptées, au moins dans la zone supérieure, au contour du profilé creux à relier.
